# EUROPEAN PATENT APPLICATION

(11) **EP 2 897 417 A1**
(43) Date of publication of application: **22.07.2015**
(21) Application number: 13847082.8
(22) Date of filing: 26.08.2013
(51) Int. Cl.: H04W 48/08

(54) **PDN SERVICE REALIZING METHOD, SYSTEM AND NETWORK ELEMENT**

(30) Priority: 18.10.2012 CN 201210397730
(71) Applicant: ZTE Corporation, Shenzhen, Guangdong 518057 (CN)
(72) Inventor: FAN, Liang, Shenzhen Guangdong 518057 (CN); YUAN, Bo, Shenzhen Guangdong 518057 (CN); ZHU, Chunhui, Shenzhen Guangdong 518057 (CN)
(74) Representative: Jones, Cerian
(86) International application number: PCT/CN2013/082242
(87) International publication number: WO 2014/059823

(57) **Abstract**

A method and system for implementing Packet Data Network (PDN) services, and network elements are disclosed. The method includes: a mobile network User Equipment (UE) acquiring an IP address of the UE and an identification IP address of an Access Point Name (APN) of the UE via a fixed network element; and the UE exchanging a data message with a mobile network gateway device via the fixed network element through the acquired IP address and the identification IP address of the APN. With the above method, system and network elements, it makes the mobile network user equipment access the network for attachment via a fixed network in an FMC network architecture and establish multiple PDN connections for assessing multiple different mobile service packet networks.

## Description

### Technical Field

The present invention relates to the field of communication, and specifically, to a method and system for implementing Packet Data Network (PDN) services, and network elements (including a mobile network user equipment, fixed network elements and a mobile network gateway device).

### Background of the Related Art

With the development of the network technology and the users' demands for services, a terminal is gradually multimoded, which can select to access through different types of access networks so as to bear multifarious services. Since there are different characteristics and transmission abilities for different network connections, the users' demands for diversity and multiple services can be better satisfied. A multi-mode terminal can implement a seamless connection between different types of radio access networks, such as a connection between a cellular Universal Mobile Telecommunications System (UMTS)/Enhanced Data Rate for Global System for Mobile communication (GSM) Evolution (EDGE)/General Packet Radio Service (GPRS) and an Institute of Electrical and Electronics Engineers (IEEE) 802.11 Wireless Local Area Networks (WLAN). The WLAN can provide a very high data rate within a small scope of family and hot point area, and a cellular network can provide a higher flexibility and a pervasive coverage but a lower data rate, if advantages of the WLAN and the cellular network can be combined, the users will benefit from this. Within a coverage area of WLAN access points, the multi-mode terminal performs data access and Voice over Internet Protocol (VoIP) application through the WLAN, and it still can perform voice call or media access through overlapped cellular networks in the meantime.

At present, the international organization for standardization Broadband Forum (BBF) and the 3rd Generation Partnership Project (3GPP) are working on standardizing the Fixed Mobile Convergence (FMC), and the related scenarios include authentication, address assignment and policy control about a 3GPP User Equipment (UE) accessing through a BBF network by a Residential Gateway (RG). In an authentication process, the 3GPP UE as a 802.1x client initiates an access authentication to the RG, and the RG as a 802.1x authenticator and a Remote Authentication Dial In User Service (RADIUS) client initiates an authentication request to a BBF Authentication Authorization Accounting (AAA) server at this point. In an address request process, an address request message initiated by the 3GPP UE requests an IP address to a mobile network gateway device (i.e., a Packet Data Network Gateway (PDN-GW)) via a Broadband Network Gateway (BNG) device. Wherein, an S2a session is established between the BNG and the PDN-GW, which is implemented through a General Packet Radio Service (GPRS) Tunneling Protocol (GTP) or a Proxy Mobile Internet Protocol (PMIP).

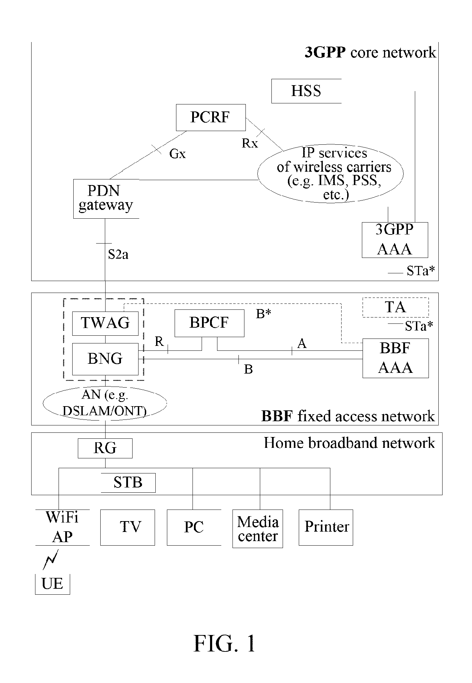

In the related art, each subscriber BNG is required to establish an S2a session with the PDN-GW. In order to support this scenario in the existing network, it is required to upgrade all BNG devices, which will affect the existing network significantly. In order to solve the problem, a fixed network access gateway (e.g., a Trusted WLAN Access Gateway (TWAG)) is introduced, and a network structure after the TWAG is introduced is as shown in FIG. 1. It is not required to perform large-scale upgrade for the BNG device after introducing the fixed network access gateway, which can minimize the influence on the existing network.

Moreover, in another scenario in the related art, the BNG device is upgraded to an enhanced BNG (eBNG), so as to support a direct session connection with the PDN-GW.

After a mobile subscriber has access through a fixed network, there is a demand of simultaneously accessing multiple different mobile service packet networks, but no solution is proposed in the related art.

### Summary of the Invention

The technical problem required to be solved by the present invention is to provide a method and system for implementing Packet Data Network (PDN) services, and network elements, to solve a problem that a mobile subscriber cannot access multiple different mobile service packet networks via a fixed network.

In order to solve the above technical problem, the present invention provides a method for implementing Packet Data Network (PDN) services, which comprises:
a mobile network User Equipment (UE) acquiring an IP address of the UE and an identification IP address of an Access Point Name (APN) of the UE via a fixed network element; and
the UE exchanging a data message with a mobile network gateway device via the fixed network element through the acquired IP address and the identification IP address of the APN.

Preferably, the identification IP address of the APN is by the fixed network element or the mobile network gateway device.

In order to solve the above technical problem, the present invention further provides a mobile network User Equipment (UE), which comprises:
an address acquisition module, configured to: initiate an address request to a fixed network element, wherein Access Point Name (APN) information is carried, and receive an IP address of the UE and an identification IP address of an APN of the UE sent by the fixed network element; and
a data message transceiver module, configured to: exchange a data message with a mobile network via the fixed network element through the acquired IP address and the identification IP address of the APN.

In order to solve the above technical problem, the present invention further provides a fixed network element, which comprises:
a connection establishment module, configured to: send a PDN connection establishment request to a mobile network gateway device based on an address request of a mobile network User Equipment (UE), wherein user identity information of the UE and APN information are carried;
an address forwarding module, configured to: receive an IP address of the UE and an identification IP address of an APN assigned by the mobile network gateway device, and forward the IP address of the UE and the identification IP address of the APN to the UE; and
a message forwarding module, configured to: receive a data message, and perform message forwarding according to a corresponding relation between the IP address of the UE and the identification IP address of the APN.

In order to solve the above technical problem, the present invention further provides another fixed network element, which comprises:
a connection establishment module, configured to: send a PDN connection establishment request to a mobile network gateway device based on an address request of a mobile network User Equipment (UE), wherein user identity information of the UE and APN information are carried;
an identification IP address assignment module, configured to: assign an identification IP address of an APN for the UE;
an address forwarding module, configured to: receive an IP address of the UE assigned by the mobile network gateway device, and forward the IP address of the UE and the assigned identification IP address of the APN to the UE; and
a message forwarding module, configured to: receive a data message, and perform message forwarding according to a corresponding relation between the IP address of the UE and the identification IP address of the APN.

In order to solve the above technical problem, the present invention further provides a mobile network gateway device, which comprises:
a connection request receiving module, configured to: receive a PDN connection establishment request sent by a fixed network element, wherein user identity information of a mobile network User Equipment (UE) and Access Point Name (APN) information are carried;
an address assignment module, configured to: assign an IP address and an identification IP address of an APN for the UE; and
an address sending module, configured to: send the IP address and the identification IP address of the APN to the fixed network element.

In order to solve the above technical problem, the present invention further provides a system for implementing Packet Data Network (PDN) services, which comprises: the mobile network User Equipment (UE), the fixed network elements and the mobile network gateway device as mentioned above.

With the method, system and network elements of the example of the present invention, it enables the mobile network user equipment UE to access the network for attachment via the fixed network in an FMC network architecture and establish multiple PDN connections, and after acquiring the identification IP address of the APN, the UE and the fixed network element can utilize the identification IP address of the APN assigned for the UE to distinguish different PDN connections of the UE, thereby enabling the UE to access multiple different mobile service packet networks and establish multiple PDN connections to implement an data message interaction between the UE and the mobile network, and solving a problem of authentication and multi-connection establishment in a scenario of fixed and mobile network convergence.

### Brief Description of Drawings

Here, the described accompanying drawings are used to provide a further understanding of the present invention and constitute a part of the present invention. The schematic examples and illustrations thereof of the present invention are used to explain the present invention, but do not constitute an inappropriate limitation on the present invention. In the drawings:
FIG. 1 is a diagram 1 of FMC architecture according to the related art.
FIG. 2 is a diagram 2 of FMC architecture according to the related art.
FIG. 3 is a flow diagram of main steps of a method for implementing Packet Data Network (PDN) services according to the example 1 of the present invention.
FIG. 4 is a flow diagram of the UE acquiring the IP address and the identification IP address of the APN.
FIG. 5 is another flow diagram of the UE acquiring the IP address and the identification IP address of the APN.
FIG. 6 is a flow diagram of the UE sending a data message.
FIG. 7 is a flow diagram of the UE receiving a data message.
FIG. 8 is a flow diagram of a method for implementing Packet Data Network (PDN) services according to the example 2 of the present invention.
FIG. 9 is a flow diagram of encapsulating and decapsulating and forwarding a UE data packet according to the example 2 of the present invention.
FIG. 10 is a flow diagram of a method for implementing Packet Data Network (PDN) services according to the example 3 of the present invention.
FIG. 11 is a flow diagram of encapsulating and decapsulating and forwarding a UE data packet according to the example 3 of the present invention.
FIG. 12 is a flow diagram of main steps of a method for implementing Packet Data Network (PDN) services according to the example 4 of the present invention.
FIG. 13 is a flow diagram of encapsulating and decapsulating and forwarding a UE data packet according to the example 4 of the present invention.
FIG. 14 is a flow diagram of main steps of a method for implementing Packet Data Network (PDN) services according to the example 5 of the present invention.
FIG. 15 is a flow diagram of encapsulating and decapsulating and forwarding a UE data packet according to the example 5 of the present invention.
FIG. 16 is a schematic diagram of a module structure of a mobile network user equipment according to the present invention.
FIG. 17 is a schematic diagram of a module structure of a fixed network element according to the present invention.
FIG. 18 is another schematic diagram of a module structure of a fixed network element according to the present invention.
FIG. 19 is a schematic diagram of a module structure of a mobile network gateway device according to the present invention.

### Preferred Embodiments of the Invention

The present invention will be described in detail in combination with the accompanying drawings and specific examples below. It should be noted that the examples in the present invention and the characteristics in the examples can be combined with each other in the condition of no conflict.

### Example 1

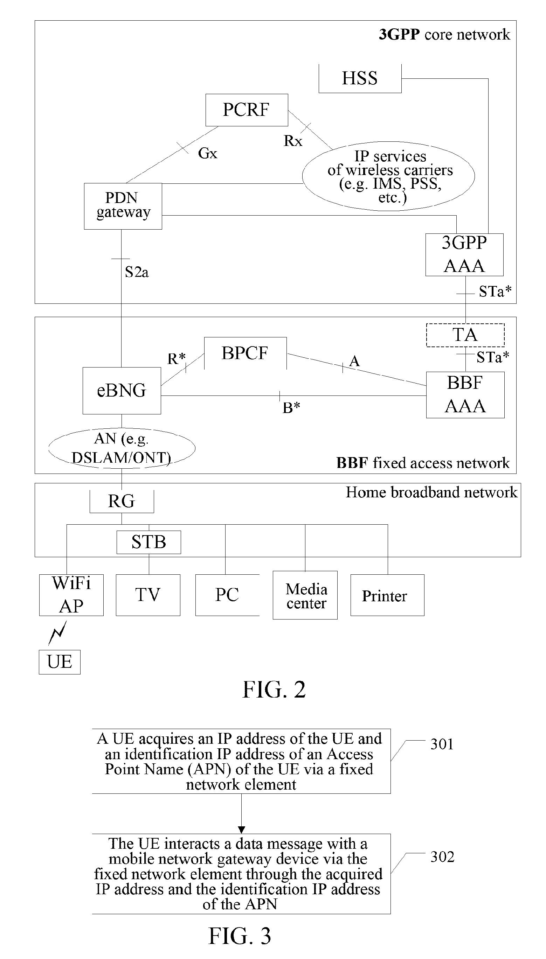

A method for implementing Packet Data Network (PDN) services of the present invention, as shown in FIG. 3, includes the following steps.

In step 301, a mobile network User Equipment (UE) acquires an IP address of the UE and an identification IP address of an Access Point Name (APN) of the UE via a fixed network element.

Understandably, the IP address of the UE is assigned by a mobile network gateway device. Alternatively, the identification IP address of the APN acquired by the UE can be assigned by the fixed network element, and it also can be assigned by the mobile network gateway device.

Specifically, the fixed network element includes an eBNG (see FIG. 2), or a combination of TWAG and BNG (see FIG. 1). The mobile network gateway device is a PDN-GW.

When the identification IP address of the APN is assigned by the mobile network gateway device (the PDN-GW), APN identification IP addresses assigned by different PDN-GWs to the same APN are different.

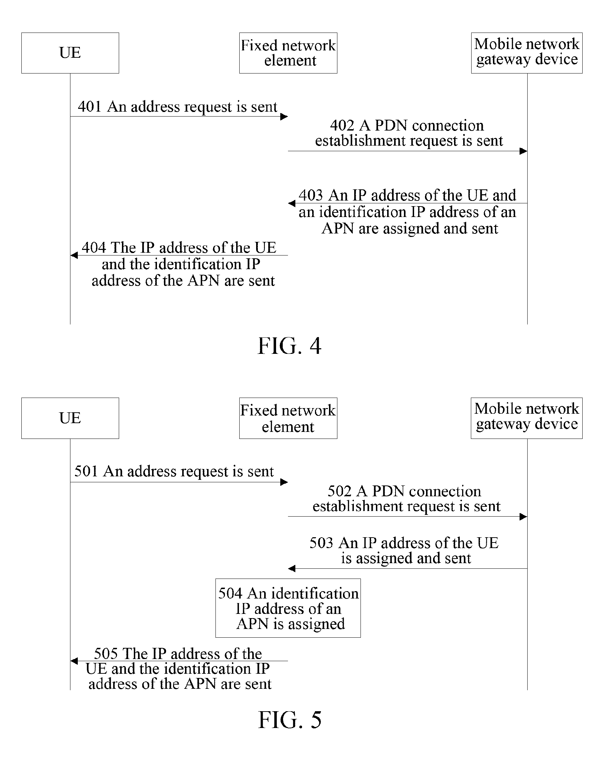

When the mobile network gateway device assigns the identification IP address of the APN, as shown in FIG. 4, the step of the UE acquiring the IP address and the identification IP address of the APN includes the following steps.

In step 401, the UE initiates an address request carrying APN information.

The address request can be sent in a Dynamic Host Configuration Protocol (DHCP) or Point-to-Point Protocol (PPP) way, the APN information is carried through an extended Option (DHCP property) field in DHCP discover or DHCP request in the DHCP way, and it is carried through a user name or an IP Control Protocol (IPCP) phase extended APN information field of a PPP authentication message in the PPP way.

For different PDN connections of the UE, the address request can be initiated in a way of carrying different APN information.

In step 402, after receiving the address request, the fixed network element initiates a PDN connection establishment request to the mobile network gateway device according to the APN information, wherein user identity information of the UE and the APN information are carried in the PDN connection establishment request.

The user identity information of the mobile network user equipment UE is International Mobile Subscriber Identity (IMSI) information.

Before initiating the PDN connection request, the fixed network element judges that the mobile network user equipment UE has passed the authentication.

In step 403, after receiving the PDN connection establishment request, the mobile network gateway device assigns the IP address of the UE and the identification IP address of the APN and sends the IP address of the UE and the identification IP address of the APN to the fixed network element.

In step 404, the fixed network element sends the IP address of the UE and the identification IP address of the APN to the UE.

The identification IP address of the APN is carried in an option filed indicating the identification IP address of the APN of an extended property of a DHCP offer or reply message or a PPP IPCP acknowledgement message.

Alternatively, when the fixed network element assigns the identification IP address of the APN, as shown in FIG. 5, the step of the UE acquiring the IP address and the identification IP address of the APN includes the following steps.

In step 501, the UE initiates an address request carrying APN information.

The address request can be sent in a DHCP or PPP way, the APN information is carried by an extended Option (DHCP property) field in the DHCP way, and it is carried by an extended APN information field of IP Control Protocol (IPCP) phase in the PPP way.

For different PDN connections of the UE, the address request can be initiated in a way of carrying different APN information.

In step 502, after receiving the address request, the fixed network element initiates a PDN connection establishment request to the mobile network gateway device according to the APN information, wherein user identity information of the UE and the APN information are carried in the PDN connection establishment request.

The user identity information of the mobile network user equipment UE is IMSI information.

Before initiating the PDN connection request, the fixed network element judges that the mobile network user equipment UE has passed the authentication.

In step 503, after receiving the PDN connection establishment request, the mobile network gateway device assigns the IP address of the UE and sends the IP address of the UE to the fixed network element.

In step 504, the fixed network element receives the IP address of the UE, and assigns the identification IP address of the APN for the UE.

In step 505, the fixed network element sends the IP address of the UE and the identification IP address of the APN to the UE.

Alternatively, the identification IP address of the APN is carried in an option filed indicating the identification IP address of the APN of a DHCP offer/reply message or a PPP IPCP acknowledgement message.

In step 302, the UE exchanges a data message in interaction with the mobile network gateway device via the fixed network element through the acquired IP address and the identification IP address of the APN.

The process of the UE sending the data message and receiving the data message will be described below.

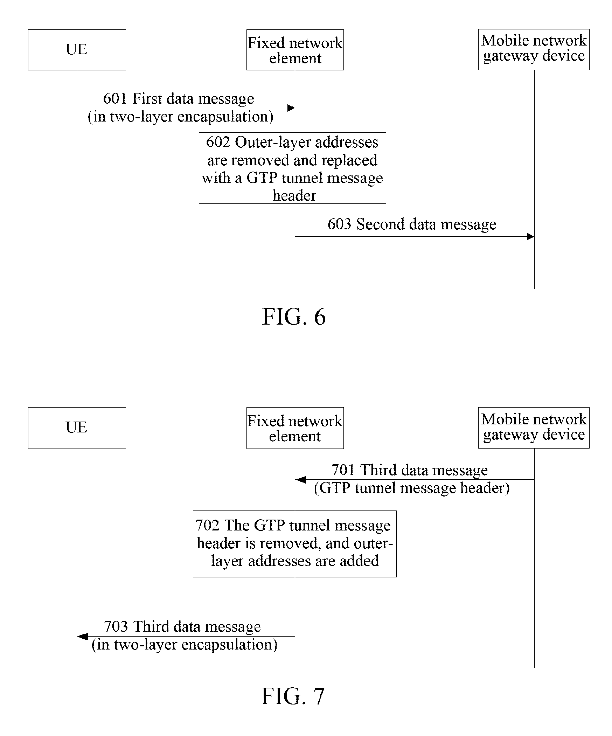

The flow of the UE sending the data message is as shown in FIG. 6, and the following steps are included.

In step 601, the UE sends a first data message in two-layer encapsulation, wherein an outer-layer source address is the IP address of the UE and an outer-layer destination address is the identification IP address of the APN; an IP Encapsulation within IP (IP in IP) encapsulation way is used when the UE sends the data message, an outer-layer destination IP address is the identification IP address of the APN, an inner-layer destination IP address is a destination IP address, an outer-layer source IP address and an inner-layer source IP address are a user IP address assigned by the mobile network gateway device for the mobile network user equipment UE.

In step 602, the fixed network element receives the first data message, replaces the outer-layer source address and the outer-layer destination address with a GTP tunnel message header between the fixed network element and the mobile network gateway device, and generates a second data message.

In step 603, the fixed network element sends the second data message to the mobile network gateway device through a GTP tunnel.

The flow of the UE receiving the data message is as shown in FIG. 7, and the following steps are included.

In step 701, the mobile network gateway device sends a third data message, the third data message includes a GTP tunnel message header, and a source IP address is an IP address of a Domain Name Server (DNS) or a preconfigured service, and a destination IP address is an IP address assigned by a PDN-GW for the UE.

In step 702, after receiving the third data message, the fixed network element deletes the GTP tunnel message header in the third data message, and modifies the third data message as a fourth data message in two-layer encapsulation, an outer-layer source IP address of the fourth data message is the corresponding identification IP address of the APN, and an outer-layer destination IP address is the IP address assigned by the PDN-GW for the UE.

In step 703, the fixed network element sends the fourth data message to the UE.

After acquiring the identification IP address of the APN, the UE and the fixed network element utilize the identification IP address of the APN assigned for the UE to distinguish different PDN connections of the UE, thereby enabling the UE to access multiple different mobile service packet networks and establish multiple PDN connections to implement an data message interaction between the UE and the mobile network.

### Example 2

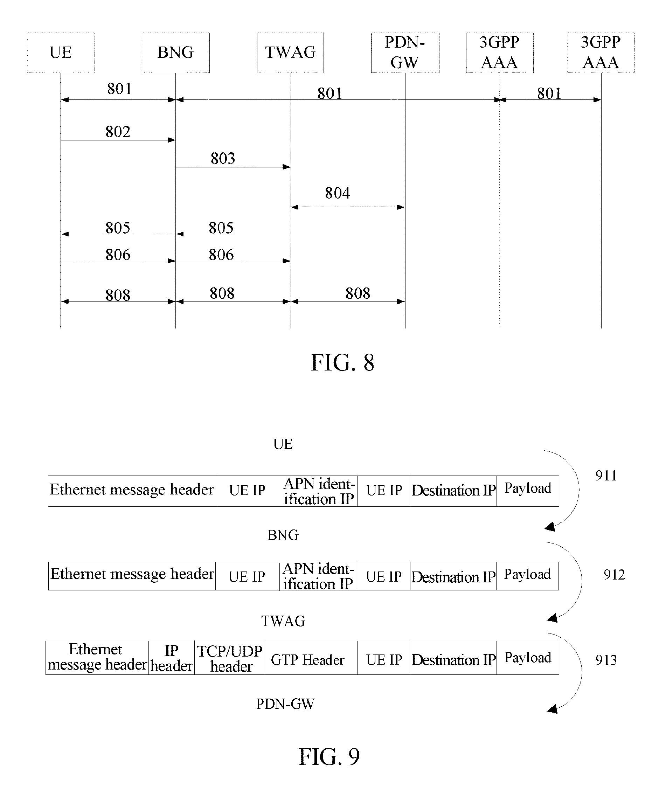

In the example 2, as a scenario shown in FIG. 1, a UE is authenticated in an 802.1x way, and acquires an IP address and an identification IP address of an APN of each PDN connection in a way of initiating a DHCP request respectively. As show in FIG. 8, the following steps are included.

In step 801, the UE initiates an 802.1x authentication carrying IMSI information, and completes a user identity authentication through an interaction between a BNG, a BBF AAA and a 3GPP AAA, the IMSI information of the user is carried in the authentication process. Alternatively, an access device (Digital Subscriber Line Access Multiplexer (DSLAM)/Optical Line Terminal (OLT)) adds access location information of the user in the authentication process.

In step 802, the UE sends a DHCP discover message, wherein APN information is carried by extending a DHCP Option field.

The UE can use a DHCP Option 60 (Vendor Type property) field to carry the APN information through, and the APN information also can be carried by extending a new Option field.

Alternatively, the access device adds an option 82 field in the DHCP discover message to indicate the access location information of the user.

In step 803, the BNG judges that the user has passed the authentication, finds a corresponding TWAG according to the IMSI information of the UE, and forwards the discover message to the TWAG device (in a DHCP Relay way or a DHCP Snooping way).

In step 804, the TWAG initiates a PDN connection establishment request to a PDN-GW according to the APN information, wherein user identity information of the UE and the APN information are carried, and the PDN-GW sends the IP address assigned for the UE and the identification IP address of the APN to the TWAG.

After the step is executed, a GTP tunnel is established between the TWAG and the PDN-GW.

With respect to UEs of the same APN, APN identification IP addresses are identical, and they can be routed to the corresponding TWAG and PDN-GW device.

The identification IP address of the APN also can be locally assigned by the TWAG for the APN, with respect to the UEs of the same APN, the APN identification IP addresses are identical, and they can be routed to the corresponding TWAG device.

In step 805, the TWAG sends a DHCP offer message to the UE through the BNG, so as to notify the UE of that the address can be provided.

In step 806, the UE sends a DHCP request message to the BNG and requests the IP address and the identification IP address of the APN, and the BNG forwards the message to the TWAG (in a DHCP Relay way or a DHCP Snooping way).

In step 807, the TWAG sends a DHCP reply message to the UE through the BNG, and sends the IP address of the user and the identification IP address of the APN to the UE.

In step 808, the UE exchanges a data message with the TWAG and the PDN-GW via the BNG through the acquired IP address and the identification IP address of the APN.

In the example, after a connection of the mobile network user equipment UE accessing via the fixed network is established, a specific flow of encapsulating and decapsulating and transmitting a UE data packet may refer to FIG. 9, and the following steps are included.

In step 911, the UE firstly selects an APN before sending a service data stream, an IP in IP encapsulation way is used, an outer-layer destination IP address is an identification IP address of the selected APN, an inner-layer destination IP address is an IP address of a DNS or a destination of the preconfigured service, an outer-layer source IP address and an inner-layer source IP address are a user IP address assigned by the PDN-GW for the UE.

In step 912, after receiving the data stream of the UE, the BNG forwards the message to the corresponding TWAG.

In step 913, after receiving the data stream of the UE, the TWAG finds corresponding GTP tunnel encapsulation information according to an APN identification IP, deletes the outer-layer IP addresses of the message which are replaced with a GTP tunnel message header between the TWAG and the PDN-GW, and sends to the PDN-GW.

The PDN-GW receives the service data stream of the UE through a GTP tunnel.

A flow of encapsulating and decapsulating and transmitting a PDN-GW data packet is similar to the foregoing flow, it is an inverse process of the above flow, which includes:
the PDN-GW encapsulating a data message and sending the data message through the GTP tunnel, wherein, the data message includes the GTP tunnel message header, and a source IP address is an IP address of the DNS or the preconfigured service, a destination IP address is an IP address assigned by the PDN-GW for the UE;
after receiving the data message through the GTP tunnel, the TWAG finding a corresponding identification IP address of the APN according to the IP address of the UE, deleting the GTP tunnel message header, and adding an outer-layer source address and an outer-layer destination address in an IP in IP encapsulation way and sending the outer-layer source address and the outer-layer destination address, wherein, an outer-layer source IP address is the corresponding identification IP address of the APN, and an outer-layer destination IP address is the IP address assigned by the PDN-GW for the UE;
the BNG sending the message in two-layer encapsulation after receiving the message in two-layer encapsulation; and
the UE receiving the message in two-layer encapsulation.

### Example 3

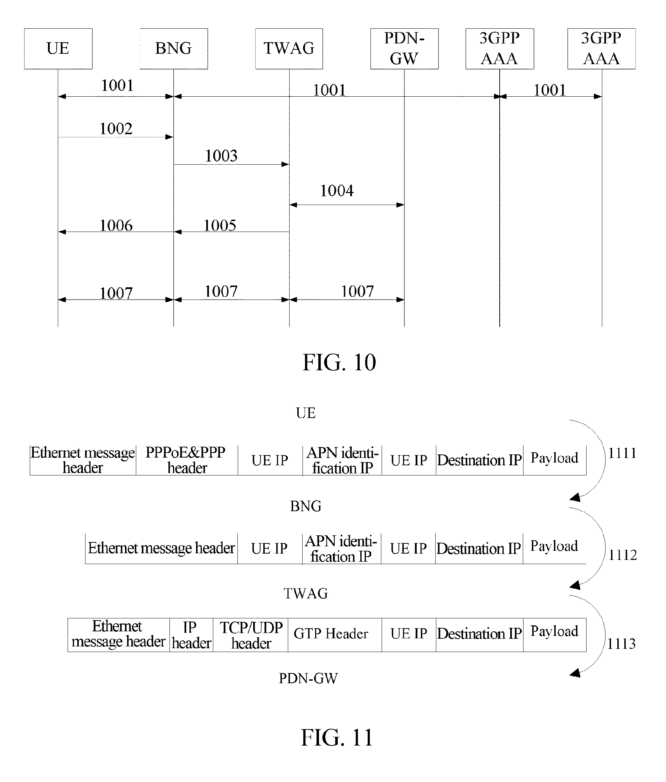

In the example, as a scenario shown in FIG. 1, a UE acquires an IP address of each PDN connection in a way of accessing authentication and requesting an address in a PPP way. As shown in FIG. 10, the following steps are included.

In step 1001, the UE initiates a Point-to-Point Protocol over Ethernet (PPPoE) access request, completes PPPoE negotiation and a PPP Link Control Protocol (LCP) negotiation process with a BNG, and completes a user identity authentication with a BBF AAA and a 3GPP AAA.

Alternatively, an access device (DSLAM/OLT) adds access location information of the user in the authentication process.

In step 1002, the UE sends an Internet Protocol Control Protocol (IPCP) address request message, wherein IMSI information of the UE and APN information are carried.

In step 1003, the BNG judges that the user has passed the authentication, finds a corresponding TWAG according to the IMSI information of the UE, and initiates an address request to the TWAG device in a DHCP way, wherein the APN information is carried.

In step 1004, the TWAG initiates a PDN connection establishment request to a PDN-GW according to the APN information, wherein user identity information of the UE is carried, and the PDN-GW sends an IP address assigned for the user to the TWAG.

After the step is executed, a GTP tunnel is established between the TWAG and the PDN-GW.

In step 1005, the TWAG and the BNG complete a DHCP address request process, meanwhile the TWAG locally assigns an identification IP address for the APN, and sends the IP address of the UE and the identification IP address of the APN to the BNG.

With respect to UEs of the same APN, the APN identification IP addresses are identical, and they can be routed to the corresponding TWAG device.

In step 1006, the BNG sends the IP address assigned to the UE and the identification IP address of the APN to the UE.

In step 1007, the UE exchanges a data message with the TWAG and the PDN-GW via the BNG through the acquired IP address and the identification IP address of the APN.

In the example, after a connection of the mobile network user equipment UE accessing via the fixed network is established, a specific flow of encapsulating and decapsulating and transmitting a UE data packet may refer to FIG. 11, and the following steps are included.

In step 1111, the UE firstly selects an APN before sending a service data stream, an IP in IP encapsulation way is used, an outer-layer destination IP address is an identification IP address of the selected APN, an inner-layer destination IP address is an IP address of a DNS or a destination of the preconfigured service, an outer-layer source IP address and an inner-layer source IP address are a user IP address assigned by the PDN-GW for the UE. An IP in IP message is encapsulated in the PPPoE way.

In step 1112, after receiving the data stream of the UE, the BNG deletes a PPPoE message header, and forwards the message to the corresponding TWAG.

In step 1113, after receiving the data stream of the UE, the TWAG finds corresponding GTP tunnel encapsulation information according to an APN identification IP, deletes the outer-layer IP addresses of the message which are replaced with a GTP tunnel message header between the TWAG and the PDN-GW, and sends to the PDN-GW.

The PDN-GW receives the service data stream of the UE through a GTP tunnel.

A flow of encapsulating and decapsulating and transmitting a PDN-GW data packet is similar to the foregoing flow, it is an inverse process of the above flow, which includes:
the PDN-GW encapsulating a data message and sending the data message through the GTP tunnel, wherein, the data message includes the GTP tunnel message header, and a source IP address is an IP address of the DNS or the preconfigured service, a destination IP address is an IP address assigned by the PDN-GW for the UE;
after receiving the data message through the GTP tunnel, the TWAG finding a corresponding identification IP address of the APN according to the IP address of the UE, deleting the GTP tunnel message header, and adding an outer-layer source address and an outer-layer destination address in an IP in IP encapsulation way and sending the outer-layer source address and the outer-layer destination address, wherein, an outer-layer source IP address is the corresponding identification IP address of the APN, and an outer-layer destination IP address is the IP address assigned by the PDN-GW for the UE;
after receiving the message in two-layer encapsulation and adding the PPPoE message header, the BNG sending the message in two-layer encapsulation; and
the UE receiving the data message sent by the BNG.

### Example 4

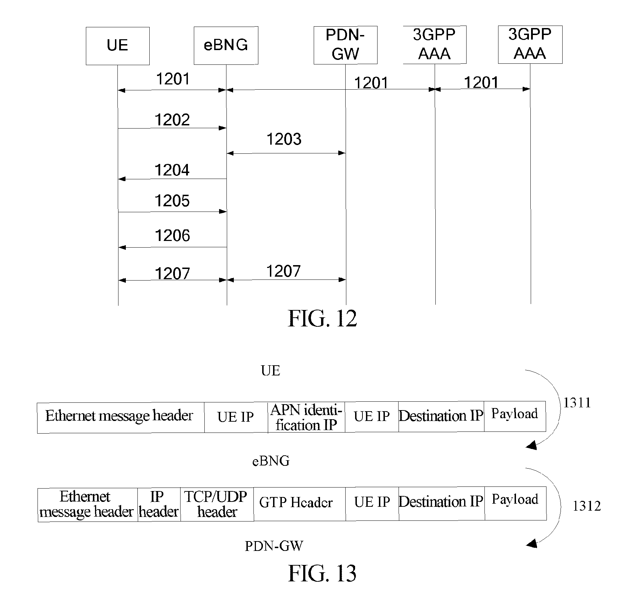

In the example, as a scenario shown in FIG. 2, a UE is authenticated in an 802.1x way, and acquires an IP address of each PDN connection in a way of initiating a DHCP request respectively. As show in FIG. 12, the following steps are included.

In step 1201, the UE initiates an 802.1x authentication carrying IMSI information, and completes a user identity authentication through an interaction between an eBNG, a BBF AAA and a 3GPP AAA, the IMSI information of the user is carried in the authentication process.

Alternatively, an access device (DSLAM/OLT) adds access location information of the user in the authentication process.

In step 1202, the UE sends a DHCP discover message, wherein APN information is carried.

Alternatively, the access device adds an option 82 field in the DHCP discover message to indicate the access location information of the user.

In step 1203, the eBNG judges that the user has passed the authentication, finds a corresponding PDN-GW according to the IMSI information of the UE and the APN information, initiates a PDN connection establishment request to the PDN-GW, wherein user identity information of the UE and the APN information are carried, and the PDN-GW sends the IP address assigned for the UE to the eBNG.

After the step is executed, a GTP tunnel is established between the eBNG and the PDN-GW.

In step 1204, the eBNG sends a DHCP offer message to the UE, so as to notify the UE of that the address can be provided.

In step 1205, the UE sends a DHCP request message to the eBNG, and requests an IP address and an identification IP address of an APN.

In step 1206, the eBNG locally assigns an identification IP address for the APN, and the eBNG sends the IP address of the user and the identification IP address of the APN to the UE through a DHCP reply message sent to the UE.

With respect to UEs of the same APN, APN identification IP addresses are identical, and they can be routed to the corresponding eBNG device.

In step 1207, the UE exchanges a data message with the PDN-GW via the eBNG through the acquired IP address and the identification IP address of the APN.

In the example, after a connection of the mobile network user equipment UE accessing via the fixed network is established, a specific flow of encapsulating and decapsulating and transmitting a UE data packet may refer to FIG. 13, and the following steps are included.

In step 1311, the UE firstly selects an APN before sending a service data stream, an IP in IP encapsulation way is used, an outer-layer destination IP address is an identification IP address of the selected APN, an inner-layer destination IP address is an IP address of a DNS or a destination of the preconfigured service, an outer-layer source IP address and an inner-layer source IP address are a user IP address assigned by the PDN-GW for the UE.

In step 1312, after receiving the data stream of the UE, the eBNG finds corresponding GTP tunnel encapsulation information according to an APN identification IP, and deletes the outer-layer IP addresses of the message which are replaced with a GTP tunnel message header between the eBNG and the PDN-GW, and sends to the PDN-GW.

The PDN-GW receives the service data stream of the UE through a GTP tunnel.

A flow of encapsulating and decapsulating and transmitting a PDN-GW data packet is similar to the foregoing flow, it is an inverse process of the above flow, which includes:
the PDN-GW encapsulating a data message and sending the data message through the GTP tunnel, wherein, the data message includes the GTP tunnel message header, and a source IP address is an IP address of the DNS or the preconfigured service, a destination IP address is an IP address assigned by the PDN-GW for the UE;
after receiving the data message through the GTP tunnel, the eBNG finding a corresponding identification IP address of the APN according to the IP address of the UE, deleting the GTP tunnel message header, and adding an outer-layer source address and an outer-layer destination address in an IP in IP encapsulation way and sending the outer-layer source address and the outer-layer destination address, wherein, an outer-layer source IP address is the corresponding identification IP address of the APN, and an outer-layer destination IP address is the IP address assigned by the PDN-GW for the UE; and
the UE receiving the message in two-layer encapsulation sent by the eBNG.

### Example 5

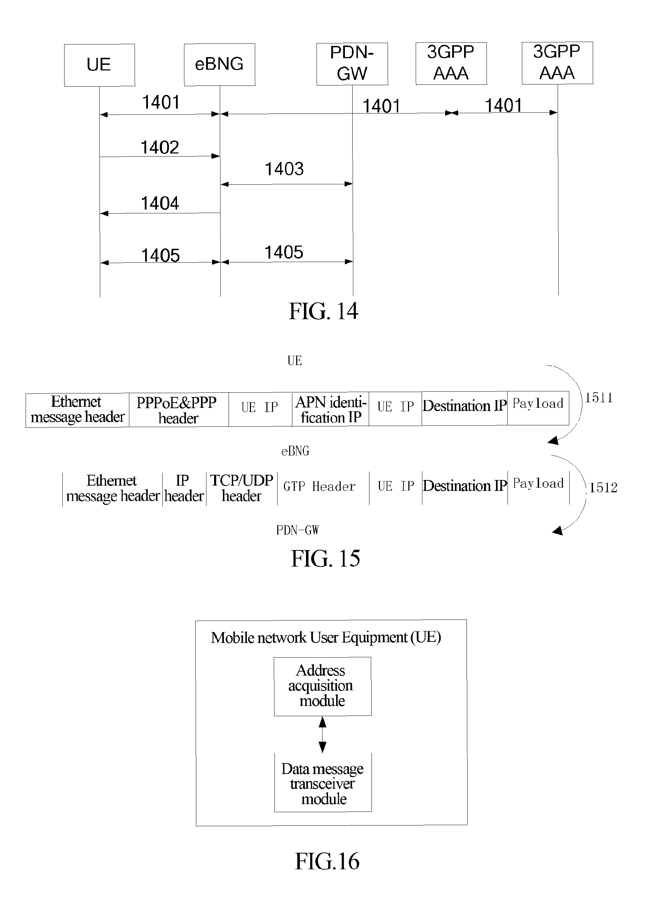

In the example, as a scenario shown in FIG. 2, a UE acquires an IP address of each PDN connection in a way of accessing authentication and requesting an address in a PPP way. As shown in FIG. 14, the following steps are included.

In step 1401, the UE initiates a PPPoE access request, completes PPPoE negotiation and a PPP LCP negotiation process with an eBNG, and completes a user identity authentication with a BBF AAA and a 3GPP AAA.

Alternatively, an access device (DSLAM/OLT) adds access location information of the user in the authentication process.

In step 1402, the UE sends an IPCP address request message, wherein APN information is carried.

In step 1403, the eBNG judges that the user has passed the authentication, finds a corresponding PDN-GW according to IMSI information of the UE and the APN information, and initiates a PDN connection establishment request to the PDN-GW according to the APN information, wherein user identity information of the UE is carried, and the PDN-GW sends an IP address assigned for the user to the eBNG.

After the step is executed, a GTP tunnel is established between the eBNG and the PDN-GW.

In step 1404, the eBNG locally assigns an identification IP address for the APN, and sends the IP address of the UE and the identification IP address of the APN to the UE.

With respect to UEs of the same APN, the APN identification IP addresses are identical, and they can be routed to the corresponding eBNG.

The identification IP address of the APN also can be assigned by the PDN-GW for the APN and informed to the eBNG, with respect to the UEs of the same APN, the APN identification IP addresses are identical, and they can be routed to the corresponding eBNG and PDN-GW device.

In step 1405, the UE exchanges a data message with the PDN-GW via the eBNG through the acquired IP address and the identification IP address of the APN.

In the example, after a connection of the mobile network user equipment UE accessing via the fixed network is established, a specific flow of encapsulating and decapsulating and transmitting a UE data packet may refer to FIG. 15, and the following steps are included.

In step 1511, the UE firstly selects an APN before sending a service data stream, an IP in IP encapsulation way is used, an outer-layer destination IP address is an identification IP address of the selected APN, an inner-layer destination IP address is an IP address of a DNS or a destination of the preconfigured service, an outer-layer source IP address and an inner-layer source IP address are a user IP address assigned by the PDN-GW for the UE. An IP in IP message is encapsulated in the PPPoE way.

In step 1512, after receiving the data stream of the UE, the eBNG deletes a PPPoE message header, finds corresponding GTP tunnel encapsulation information according to an APN identification IP, deletes the outer-layer IP addresses of the message which are replaced with a GTP tunnel message header between the TWAG and the PDN-GW, and sends to the PDN-GW.

The PDN-GW receives the service data stream of the UE through a GTP tunnel.

A flow of encapsulating and decapsulating and transmitting a PDN-GW data packet is similar to the foregoing flow, it is an inverse process of the above flow, which includes:
the PDN-GW encapsulating a data message and sending the data message, wherein, the data message includes the GTP tunnel message header, and a source IP address is an IP address of the DNS or the preconfigured service, a destination IP address is an IP address assigned by the PDN-GW for the UE;
after receiving the data message through the GTP tunnel, the eBNG finding a corresponding identification IP address of the APN according to the IP address of the UE, deleting the GTP tunnel message header, and adding an outer-layer source address, an outer-layer destination address and a PPPoE message header in an IP in IP encapsulation way and sending the outer-layer source address, the outer-layer destination address and the PPPoE message header, wherein, an outer-layer source IP address is the corresponding identification IP address of the APN, and an outer-layer destination IP address is the IP address assigned by the PDN-GW for the UE; and
the UE receiving the data message sent by the eBNG.

In order to implement the above method, the present invention also provides a mobile network User Equipment (UE), and as show in FIG. 16, the UE includes:
an address acquisition module, used to: initiate an address request to a fixed network element, wherein Access Point Name (APN) information is carried, and receive an IP address of the UE and an identification IP address of an APN of the UE sent by the fixed network element; and
a data message transceiver module, used to: exchange a data message with a mobile network via the fixed network element through the acquired IP address and the identification IP address of the APN.

Furthermore, the identification IP address of the APN is assigned by the fixed network element or the mobile network gateway device.

The APN information is carried in an extended property of a DHCP discover message or DHCP request message or in a user name or an option field of a PPP authentication message; the identification IP address of the APN is carried in an extended property of a DHCP offer message or DHCP reply message or in an option field indicating the identification IP address of the APN of a PPP IPCP acknowledgement message.

Specifically, the data message received or sent by the data message transceiver module is in two-layer encapsulation, an outer-layer source address of the sent data message is the IP address of the UE and an outer-layer destination address of the sent data message is the identification IP address of the APN, an outer-layer source address of the received data message is the identification IP address of the APN and an outer-layer destination address of the received data message is the IP address of the UE.

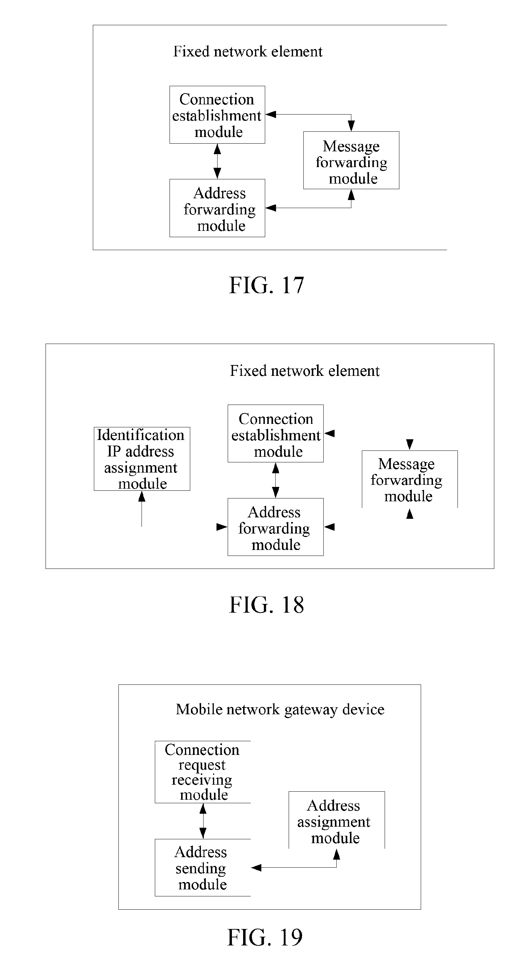

In order to implement the foregoing method example, the present invention also provides a fixed network element, and as show in FIG. 17, the fixed network element includes:
a connection establishment module, used to: send a PDN connection establishment request to a mobile network gateway device based on an address request of a mobile network User Equipment (UE), wherein user identity information of the UE and APN information are carried;
an address forwarding module, used to: receive an IP address of the UE and an identification IP address of an APN assigned by the mobile network gateway device, and forward the IP address of the UE and the identification IP address of the APN to the UE; and
a message forwarding module, used to: receive a data message, and perform message forwarding according to a corresponding relation between the IP address of the UE and the identification IP address of the APN.

Specifically, the received data message is a first data message in two-layer encapsulation, and an outer-layer source address is the IP address of the UE and an outer-layer destination address is the identification IP address of the APN; the message forwarding module replaces the outer-layer source address and the outer-layer destination address of the first data message with a GTP tunnel message header between the fixed network element and the mobile network gateway device and then sends.

The received data message is a third data message, the third data message includes a GTP tunnel message header, and a source IP address is an IP address of the DNS or the preconfigured service, a destination IP address is an IP address assigned by the PDN-GW for the UE, the message forwarding module deletes the GTP tunnel message header in the data message, and modifies the data message as a fourth data message in two-layer encapsulation and then sends the fourth data message, an outer-layer source IP address of the fourth data message is the corresponding identification IP address of the APN, and an outer-layer destination IP address is the IP address assigned by the PDN-GW for the UE.

Preferably, the APN information is carried in an extended property of a DHCP discover message or DHCP request message or in a user name or an option field of a PPP authentication message; the identification IP address of the APN is carried in an extended property of a DHCP offer message or DHCP reply message or in an option field indicating the identification IP address of the APN of a PPP IPCP acknowledgement message.

Apparently, the identification IP address of the APN sent by the fixed network element shown in FIG. 17 to the UE is assigned by the mobile network gateway device, and corresponding to the method example, the identification IP address of the APN also can be assigned by the fixed network element. Correspondingly, the present invention also provides another fixed network element, and as show in FIG. 18, the fixed network element includes:
a connection establishment module, used to: send a PDN connection establishment request to a mobile network gateway device based on an address request of a mobile network User Equipment (UE), wherein user identity information of the UE and APN information are carried;
an identification IP address assignment module, used to: assign an identification IP address of an APN for the UE;
an address forwarding module, used to: receive an IP address of the UE assigned by the mobile network gateway device, and forward the IP address of the UE and the assigned identification IP address of the APN to the UE; and
a message forwarding module, used to: receive a data message, and perform message forwarding according to a corresponding relation between the IP address of the UE and the identification IP address of the APN.

Specifically, the received data message is a first data message in two-layer encapsulation, and an outer-layer source address is the IP address of the UE and an outer-layer destination address is the identification IP address of the APN; the message forwarding module replaces the outer-layer source address and the outer-layer destination address of the first data message with a GTP tunnel message header between the fixed network element and the mobile network gateway device and then sends the message.

The received data message is a third data message, the third data message includes a GTP tunnel message header, and a source IP address is an IP address of the DNS or the preconfigured service, a destination IP address is an IP address assigned by the PDN-GW for the UE, the message forwarding module deletes the GTP tunnel message header in the data message, modifies the data message as a fourth data message in two-layer encapsulation and then sends the fourth data message, an outer-layer source IP address of the fourth data message is the corresponding identification IP address of the APN, and an outer-layer destination IP address is the IP address assigned by the PDN-GW for the UE.

The APN information is carried in an extended property of a DHCP discover message or DHCP request message or in a user name or an option field of a PPP authentication message; the identification IP address of the APN is carried in an extended property of a DHCP offer message or DHCP reply message or in an option field indicating the identification IP address of the APN of a PPP IPCP acknowledgement message.

The function modules of the fixed network element shown in FIG. 17 and the fixed network element shown in FIG. 18 are mainly implemented in the TWAG or the eBNG.

Corresponding to the above method example, the present invention also provides a mobile network gateway device, and as shown in FIG. 19, the device includes:
a connection request receiving module, used to: receive a PDN connection establishment request sent by a fixed network element, wherein user identity information of a mobile network User Equipment (UE) and Access Point Name (APN) information are carried;
an address assignment module, used to: assign an IP address and an identification IP address of an APN for the UE; and
an address sending module, used to: send the IP address and the identification IP address of the APN to the fixed network element.

In order to implement the above method example, the present invention also provides a system for implementing Packet Data Network (PDN) services, and the system includes the mobile network User Equipment (UE) as shown in FIG. 16, the fixed network element as shown in FIG. 17 and the mobile network gateway device as shown in FIG. 19.

In order to implement the above method example, the present invention also provides another system for implementing Packet Data Network (PDN) services, and it is characterized in that the system includes the mobile network User Equipment (UE) as shown in FIG. 16, the fixed network element as shown in FIG. 18 and the mobile network gateway device as shown in FIG. 19.

With the method, system and network elements of the present invention, it enables the mobile network user equipment UE to access the network for attachment via the fixed network in an FMC network architecture and establish multiple PDN connections, and after acquiring the identification IP address of the APN, the UE and the fixed network element can utilize the identification IP address of the APN assigned for the UE to distinguish different PDN connections of the UE, thereby enabling the UE to access multiple different mobile service packet networks and establish multiple PDN connections to implement an data message interaction between the UE and the mobile network, and solving a problem of authentication and multi-connection establishment in a scenario of fixed and mobile network convergence.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

### Industrial Applicability

With the method, system and network elements of the example of the present invention, it enables the mobile network user equipment UE to access the network for attachment via the fixed network in an FMC network architecture and establish multiple PDN connections, and after acquiring the identification IP address of the APN, the UE and the fixed network element can utilize the identification IP address of the APN assigned for the UE to distinguish different PDN connections of the UE, thereby enabling the UE to access multiple different mobile service packet networks and establish multiple PDN connections to implement an data message interaction between the UE and the mobile network, and solving a problem of authentication and multi-connection establishment in a scenario of fixed and mobile network convergence.

## Claims

1. A method for implementing Packet Data Network (PDN) services, comprising:
a mobile network User Equipment (UE) acquiring an IP address of the UE and an identification IP address of an Access Point Name (APN) of the UE via a fixed network element; and
the UE exchanging a data message with a mobile network gateway device via the fixed network element through the acquired IP address and the identification IP address of the APN.

2. The method according to claim 1, wherein, the identification IP address of the APN is by the fixed network element or the mobile network gateway device.

3. The method according to claim 1, wherein, the UE acquiring the IP address and the identification IP address of the APN comprises:
the UE initiating an address request, wherein APN information is carried in the address request;
after receiving the address request, the fixed network element initiating a PDN connection establishment request carrying user identity information of the UE and the APN information to the mobile network gateway device according to the APN information;
after receiving the PDN connection establishment request, the mobile network gateway device assigning the IP address of the UE and the identification IP address of the APN and sending the IP address of the UE and the identification IP address of the APN to the fixed network element; and
the fixed network element sending the IP address of the UE and the identification IP address of the APN to the UE.

4. The method according to claim 1, wherein, the UE acquiring the IP address and the identification IP address of the APN comprises:
the UE initiating an address request, wherein APN information is carried in the address request;
after receiving the address request, the fixed network element initiating a PDN connection establishment request carrying user identity information of the UE and the APN information to the mobile network gateway device according to the APN information;
after receiving the PDN connection establishment request, the mobile network gateway device assigning an IP address for the UE and sending the IP address to the fixed network element; and
the fixed network element receiving the IP address of the UE, assigning the identification IP address of the APN for the UE, and sending the IP address of the UE and the identification IP address of the APN to the UE.

5. The method according to claim 3 or 4, wherein, the address request is sent in a Dynamic Host Configuration Protocol (DHCP) or Point-to-Point Protocol (PPP) way.

6. The method according to claim 1, wherein, the APN information is carried in an extended property of a DHCP discover message or DHCP request message or in a user name or an option field of a PPP authentication message; the identification IP address of the APN is carried in an extended property of a DHCP offer message or DHCP reply message or in an option field indicating the identification IP address of the APN of a PPP Internet Protocol Control Protocol (IPCP) acknowledgement message.

7. The method according to claim 1, wherein, a process of the UE sending the data message comprises:
the UE sending a first data message in two-layer encapsulation, wherein an outer-layer source address is the IP address of the UE and an outer-layer destination address is the identification IP address of the APN;
the fixed network element receiving the first data message, replacing the outer-layer source address and the outer-layer destination address with a GTP tunnel message header between the fixed network element and the mobile network gateway device, and generating a second data message; and
the fixed network element sending the second data message to the mobile network gateway device through a GTP tunnel.

8. The method according to claim 1, wherein, a process of the UE receiving the data message comprises:
the mobile network gateway device sending a third data message, wherein the third data message comprises a GTP tunnel message header, and a source IP address is an IP address of a Domain Name Server (DNS) or a preconfigured service, and a destination IP address is an IP address assigned by a Packet Data Network Gateway (PDN-GW) for the UE;
after receiving the third data message, the fixed network element deleting the GTP tunnel message header in the third data message, and modifying the third data message as a fourth data message in two-layer encapsulation, wherein an outer-layer source IP address of the fourth data message is the corresponding identification IP address of the APN, and an outer-layer destination IP address is the IP address assigned by the PDN-GW for the UE; and
the fixed network element sending the fourth data message to the UE.

9. A mobile network User Equipment (UE), comprising:
an address acquisition module, configured to: initiate an address request carrying Access Point Name (APN) information to a fixed network element, and receive an IP address of the UE and an identification IP address of an APN of the UE sent by the fixed network element; and
a data message transceiver module, configured to: exchange a data message with a mobile network via the fixed network element through the acquired IP address and the identification IP address of the APN.

10. The UE according to claim 9, wherein, the identification IP address of the APN is assigned by the fixed network element or a mobile network gateway device.

11. The UE according to claim 9, wherein, the APN information is carried in an extended property of a DHCP discover message or DHCP request message or in a user name or an option field of a PPP authentication message; the identification IP address of the APN is carried in an extended property of a DHCP offer message or DHCP reply message or in an option field indicating the identification IP address of the APN of a PPP IPCP acknowledgement message.

12. The UE according to claim 9, wherein, the data message received or sent by the data message transceiver module is in two-layer encapsulation, an outer-layer source address of the sent data message is the IP address of the UE and an outer-layer destination address of the sent data message is the identification IP address of the APN, an outer-layer source address of the received data message is the identification IP address of the APN and an outer-layer destination address of the received data message is the IP address of the UE.

13. A fixed network element, comprising:
a connection establishment module, configured to: send a PDN connection establishment request to a mobile network gateway device based on an address request of a mobile network User Equipment (UE), wherein user identity information of the UE and APN information are carried;
an address forwarding module, configured to: receive an IP address of the UE and an identification IP address of an APN assigned by the mobile network gateway device, and forward the IP address of the UE and the identification IP address of the APN to the UE; and
a message forwarding module, configured to: receive a data message, and perform message forwarding according to a corresponding relation between the IP address of the UE and the identification IP address of the APN.

14. The fixed network element according to claim 13, wherein,
the message forwarding module is configured to: when the received data message is a first data message in two-layer encapsulation, and an outer-layer source address is the IP address of the UP and an outer-layer destination address is the identification IP address of the APN, replace the outer-layer source address and the outer-layer destination address of the first data message with a GTP tunnel message header between the fixed network element and the mobile network gateway device and then send; and
the message forwarding module is configured to: when the received data message is a third data message, the third data message comprises a GTP tunnel message header, and a source IP address is an IP address of a DNS or a preconfigured service, a destination IP address is an IP address assigned by a PDN-GW for the UE, delete the GTP tunnel message header in the data message, and modify the data message as a fourth data message in two-layer encapsulation and then sends the fourth data message, wherein an outer-layer source IP address of the fourth data message is the corresponding identification IP address of the APN, and an outer-layer destination IP address is the IP address assigned by the PDN-GW for the UE.

15. The fixed network element according to claim 13, wherein, the APN information is carried in an extended property of a DHCP discover message or DHCP request message or in a user name or an option field of a PPP authentication message; the identification IP address of the APN is carried in an extended property of a DHCP offer message or DHCP reply message or in an option field indicating the identification IP address of the APN of a PPP IPCP acknowledgement message.

16. A fixed network element, comprising:
a connection establishment module, configured to: send a PDN connection establishment request carrying user identity information of the UE and APN information to a mobile network gateway device based on an address request of a mobile network User Equipment (UE);
an identification IP address assignment module, configured to: assign an identification IP address of an APN for the UE;
an address forwarding module, configured to: receive an IP address of the UE assigned by the mobile network gateway device, and forward the IP address of the UE and the assigned identification IP address of the APN to the UE; and
a message forwarding module, configured to: receive a data message, and perform message forwarding according to a corresponding relation between the IP address of the UE and the identification IP address of the APN.

17. The fixed network element according to claim 16, wherein,
the message forwarding module is configured to: when the received data message is a first data message in two-layer encapsulation, and an outer-layer source address is the IP address of the UE and an outer-layer destination address is the identification IP address of the APN, replace the outer-layer source address and the outer-layer destination address of the first data message with a GTP tunnel message header between the fixed network element and the mobile network gateway device and then send; and
the message forwarding module is configured to: when the received data message is a third data message, the third data message comprises a GTP tunnel message header, a source IP address is an IP address of a DNS or a preconfigured service, and a destination IP address is an IP address assigned by a PDN-GW for the UE, delete the GTP tunnel message header in the data message, and modify the data message as a fourth data message in two-layer encapsulation and then sends the fourth data message, wherein an outer-layer source IP address of the fourth data message is the corresponding identification IP address of the APN, and an outer-layer destination IP address is the IP address assigned by the PDN-GW for the UE as the fixed network element according to the claim.

18. The fixed network element according to claim 16, wherein, the APN information is carried in an extended property of a DHCP discover message or DHCP request message or in a user name or an option field of a PPP authentication message; the identification IP address of the APN is carried in an extended property of a DHCP offer message or DHCP reply message or in an option field indicating the identification IP address of the APN of a PPP IPCP acknowledgement message.

19. A mobile network gateway device, comprising:
a connection request receiving module, configured to: receive a PDN connection establishment request carrying user identity information of a mobile network User Equipment (UE) and Access Point Name (APN) information sent by a fixed network element;
an address assignment module, configured to: assign an IP address and an identification IP address of an APN for the UE; and
an address sending module, configured to: send the IP address and the identification IP address of the APN to the fixed network element.

20. A system for implementing Packet Data Network (PDN) services, comprising: the mobile network User Equipment (UE) according to any one of claims 9 to 12, the fixed network element according to claim 13 or 15 and the mobile network gateway device according to claim 19.

21. A system for implementing Packet Data Network (PDN) services, comprising: the mobile network User Equipment (UE) according to any one of claims 9 to 12, the fixed network element according to claim 16 or 18 and a mobile network gateway device.
